# EUROPEAN PATENT APPLICATION

(11) **EP 4 528 535 A1**
(43) Date of publication of application: **26.03.2025**
(21) Application number: 23829471.4
(22) Date of filing: 07.03.2023
(51) Int. Cl.: G06F 16/27

(54) **DATA FLOW PERCEPTION METHOD AND RELATED APPARATUS**

(30) Priority: 30.06.2022 CN 202210772631; 19.10.2022 CN 202211291631
(71) Applicant: Huawei Technologies Co., Ltd., Shenzhen, Guangdong 518129 (CN)
(72) Inventor: ZHAO, Yue, Shenzhen, Guangdong 518129 (CN); LAN, Longwen, Shenzhen, Guangdong 518129 (CN); LU, Jiangbo, Shenzhen, Guangdong 518129 (CN); ZHOU, Zibo, Shenzhen, Guangdong 518129 (CN)
(74) Representative: Gill Jennings & Every LLP
(86) International application number: PCT/CN2023/080128
(87) International publication number: WO 2024/001280

(57) **Abstract**

This application provides a data mobility sensing method and a related apparatus, and is applied to the field of information technologies and storage technologies. In this application, when target structured data on a big data platform is stored, corresponding directories include a target directory, and a data mobility sensing apparatus can sense data mobility of the target directory and update a MetaStore on the big data platform based on the data mobility of the target directory, so that the MetaStore on the big data platform includes metadata of local structured data, but does not include metadata of non-local structured data. In this application, a data storage system senses locality of structured data, so that the big data platform can query local data when executing a query, without missing detection of the local data or accessing data that has moved to another storage cluster. This effectively improves correctness of a query result and stability of query efficiency.

## Description

### TECHNICAL FIELD

This application relates to the field of information technologies (information technologies, ITs) and storage technologies, and in particular, to a data mobility sensing method and a related apparatus.

### BACKGROUND

With development of network technologies and popularization of a cloud architecture, an enterprise data center develops from an active/standby mode to a multi-data center collaboration mode. With explosively growth of data, data distribution also develops from centralized management of a single data center to federated management of a plurality of data centers. Growing services need to simultaneously use data stored in the plurality of data centers for analysis and query.

Data queries across data centers depend on file views. Each data center queries the data center based on a file view of the data center, and then query results of a plurality of data centers are summarized to obtain a final query result.

In a multi-data center environment, establishing a unified file system and providing a global unified file view capability gradually become a trend. To be specific, data in a plurality of data centers is logically organized in a unified file system, and an overall file view of the unified file system can be viewed in each data center. In the unified file system, views of an upper-layer file system are unified, and file data can move between the plurality of data centers. Any data center can access the data in the plurality of data centers and load remote data to the data center.

In this case, because views viewed in the plurality of data centers are the overall file view of the unified file system, it is difficult to query only local data, and consequently a cross-data center query mechanism is invalid. In addition, because the data can move between the plurality of data centers, efficiency of a data query in one data center may deteriorate because data in another data center is accessed.

How to resolve the foregoing problem is a hot topic that is being researched by a person skilled in the art of this application.

### SUMMARY

Embodiments of this application provide a data mobility sensing method and a related apparatus, to improve correctness of a query result and stability of query efficiency in a cross-device query process.

According to a first aspect, an embodiment of this application provides a data mobility sensing method, including:
obtaining data mobility information that is of a target directory in a file system and that is in a first storage cluster, where the data mobility information indicates that data in the target directory is migrated from the first storage cluster to a second storage cluster; and the target directory is a directory, in the file system, corresponding to target structured data on a first big data platform; and
scanning a MetaStore on the first big data platform based on information about the target directory, to obtain metadata of the target structured data, where the metadata of the target structured data is used to describe an attribute of the target structured data; and the MetaStore on the first big data platform includes respective metadata of a plurality of pieces of structured data on the first big data platform, and the plurality of pieces of structured data include the target structured metadata.

Optionally, the method may be applied to a data processing system (referred to as a first data processing system for ease of differentiation). The first data processing system includes the foregoing first storage cluster. For example, the method is applied to a first data mobility sensing apparatus deployed in the first data processing system.

Optionally, the first data processing system further includes a first computing cluster, the first computing cluster is connected to the first storage cluster, and the first big data platform runs in the first computing cluster. Further, the first data mobility sensing apparatus also runs in the first computing cluster.

In this embodiment of this application, when target structured data on the first big data platform is stored, a corresponding directory includes the target directory. Therefore, in this application, the MetaStore on the first big data platform is updated based on the data mobility of the target directory by sensing data mobility of the target directory, so that the MetaStore on the big data platform includes metadata of local structured data (that is, the first storage cluster), but does not include metadata of structured data that has been migrated out of the first storage cluster. In this way, a big data platform can sense locality of the structured data, so that when executing a query, the big data platform may query local data. Data that has moved to another storage cluster is not accessed, thereby effectively improving correctness of a query result and stability of query efficiency.

In a possible implementation of the first aspect, the metadata of the target structured data includes a storage location of the target structured data in the first storage cluster.

In this implementation, the big data platform may read data content of the target structured data as soon as possible by using the metadata of the target structured data, to improve the query efficiency.

In a possible implementation of the first aspect, the storage location of the target structured data in the first storage cluster is a storage location corresponding to the target directory.

In another possible implementation of the first aspect, the target structured data is a data table or a database on the first big data platform.

In a possible implementation of the first aspect, the metadata of the target structured data includes an identity of the target structured data.

It should be understood that the identity herein is an identity for distinguishing between different target structured data, and includes but is not limited to a name, a number, or the like. For example, the target structured data is the database. Different databases may be distinguished from each other by using database names or database numbers. For example, the target structured data is the table. Different tables may be distinguished from each other by using table names and database names of databases in which the tables are located.

In a possible implementation of the first aspect, the metadata of the target structured data further includes one or more of the following: a version of the target structured data, a type of the target structured data, a partition identifier of the target structured data, the version of the target structured data, or the like.

In this implementation, the metadata of the target structured may further reflect a plurality of attributes of the target structured data, so that a service can correctly identify target structured data that needs to be used, and details of a plurality of tables can be recorded and traced. Particularly, for a service system including a plurality of tables, for example, a service system including hundreds or thousands of tables, the plurality of attributes of the target structured data are recorded and described in metadata, to facilitate distinguishing between the structured data based on different periods and different types, so that the structured data is conveniently managed, to improve use experience.

In another possible implementation of the first aspect, the scanning a MetaStore on the first big data platform based on information about the target directory, to obtain metadata of the target structured data includes:
scanning a storage location of each piece of structured data in the MetaStore on the first big data platform based on the information about the target directory, and using structured data whose storage location is target data as the target structured data.

In this manner, an upper layer presents data to a user by using the structured data as a dimension, and a storage layer records data content of the structured data in a form of a directory. An access location of the target directory belongs to the storage location of the target structured data.

Because migration is performed by directory during migration, one or more pieces of structured data may be stored in a storage location corresponding to the directory. Therefore, the MetaStore is scanned by using the information about the target directory, to avoid a case in which some structured data has been migrated to a device of the target directory with the directory, and metadata of the structured data is not deleted, and improve the correctness of the query result and the stability of the query efficiency.

In another possible implementation of the first aspect, the scanning a MetaStore on the first big data platform based on information about the target directory includes:
scanning the MetaStore based on the information about the target directory by using a MetaStore service on the first big data platform.

The MetaStore service may be used to manage the MetaStore, and provide addition, deletion, a query, or modification of the MetaStore. The MetaStore service is invoked to manage the metadata on the big data platform, to facilitate improving execution efficiency. In addition, functional modules of a system are decoupled, to improve flexibility.

In another possible implementation of the first aspect, the second storage cluster belongs to a second data processing system, the second data processing system further includes a second computing cluster connected to the second storage cluster, and a second big data platform runs in the second computing cluster.

The method further includes:
providing the second computing cluster with the metadata of the target structured data, to enable the second computing cluster to insert the metadata of the target structured data into a MetaStore on the second big data platform.

Because the data in the target directory is migrated to the second storage cluster, the data mobility sensing apparatus provides the second computing cluster with the metadata of the target structured data, so that the second computing cluster updates the MetaStore on the first big data platform as soon as possible, thereby preventing the metadata of local structured data from being missing from the MetaStore on the second big data platform. In this way, the big data platform can sense the locality of the structured data, without missing detection of data in the second storage cluster, thereby effectively improving the correctness of the query result and the stability of the query efficiency.

In another possible implementation of the first aspect, the target structured metadata is used to construct the target structured data.

In another possible implementation of the first aspect, the providing the second computing cluster with the metadata of the target structured data includes:
converting the metadata of the target structured data into data in a first format; and
providing the second computing cluster with the data in the first format.

Optionally, the first format may be a specified markup language format. A markup language may be used to mark data and define a data type, has a strict syntax requirement, and can separate content from a form, to facilitate simplifying document information transmission. The first format includes but is not limited to a format such as a JavaScript object notation (JavaScript object notation, JSON) format, a YAML (a type of data serialization format), or an extensible markup language (extensible markup language, XML) format.

In this implementation, transmission of a storage mapping relationship of the target node is performed by using a target format during transmission, so that lightweight data transmission can be implemented, and data transmission efficiency can be effectively improved.

In another possible implementation of the first aspect, the file system belongs to a global file system, and the first storage cluster and the second storage cluster each store a part of data of the global file system. The global file system provides a global message bus.

The providing the second computing cluster with the metadata of the target structured data includes:
sending the metadata of the target structured data to the global message bus.

In this implementation, data transmission is performed by using the global message bus, and a source device and a destination device do not need to sense each other. This facilitates decoupling of devices in a cross-device service system.

In another possible implementation of the first aspect, the file system belongs to a global file system, and the first storage cluster and the second storage cluster each store a part of data of the global file system. The global file system provides a global message bus.

The obtaining data mobility information that is of a target directory in a file system and that is in the first storage cluster includes:
monitoring the global message bus to obtain the data mobility information of the target directory.

In this implementation, data mobility may also be released through the global message bus. A data mobility status can be known by monitoring a message of the global message bus. The source device and the destination device do not need to sense each other. This facilitates the decoupling of devices in the cross-device service system.

In another possible implementation of the first aspect, the method further includes:
subscribing to data mobility information of a plurality of directories in the global file system from the global message bus, where the plurality of directories are directories respectively corresponding to the plurality of pieces of structured data in the global file system.

The file system may store a plurality of types of data. Therefore, it is not necessary to pay attention to some data. A part of directories are focused on based on a user requirement and/or a service by subscribing to data mobility information of a part of directories, thereby reducing an invalid response.

In another possible implementation of the first aspect, the MetaStore on the first big data platform from which the metadata of the target structured data is deleted is used for a service query for big data, and the service query does not relate to a query for the target structured data.

Optionally, the first big data platform executes the service query for the big data.

In another possible implementation of the first aspect, the method further includes:
obtaining metadata of a file in the target directory, where the metadata of the file in the target directory indicates a home device of the file in the target directory; and
when the home device of the file in the target node is not the first storage cluster, migrating the data in the target directory out of the first storage cluster.

In another possible implementation of the first aspect, the method further includes:
obtaining the metadata of the file in the target directory, where the metadata of the file in the target directory indicates storage layout information of the file in the target directory; and
when the storage layout information of the file in the target node does not include indication information of the first storage cluster, migrating the data in the target directory out of the first storage cluster.

According to a second aspect, an embodiment of this application provides a data mobility sensing method, including:
after obtaining data mobility information of a target directory in a file system and obtaining metadata of target structured data, inserting the metadata of the target structured data into a MetaStore on a second big data platform. The data mobility information indicates that data in the target directory is migrated to a second storage cluster. The target directory is a storage directory corresponding to the target structured data in the second storage cluster. The metadata of the target structured data is used to describe an attribute of the target structured data.

Optionally, the method may be applied to a data processing system (referred to as a second data processing system for ease of differentiation). The second data processing system includes the foregoing second storage cluster. For example, the method is applied to a second data mobility sensing apparatus deployed in the second data processing system.

Optionally, the second data processing system further includes a second computing cluster, the second computing cluster is connected to the second storage cluster, and the second big data platform runs in the second computing cluster. Further, the second data mobility sensing apparatus also runs in the second computing cluster.

In this embodiment of this application, when target structured data on a first big data platform is stored, a corresponding directory includes the target directory. When the data in the target directory is migrated to the second storage cluster, it indicates that the data content of the target structure data moves to the second storage cluster. Therefore, in this solution, a MetaStore on the first big data platform is updated based on the data mobility of the target directory by sensing the data mobility of the target directory, to prevent metadata of local structured data from being missing from the MetaStore on the second big data platform. In this way, a big data platform can sense locality of structured data, so that the big data platform may query local data when executing a query, without missing detection of data in the second storage cluster. This effectively improves correctness of a query result and stability of query efficiency.

Optionally, the MetaStore on the second big data platform includes respective metadata of a plurality of pieces of structured data on the second big data platform.

In a possible implementation of the second aspect, the metadata of the target structured data includes a storage location of the target structured data in the second storage cluster.

In another possible implementation of the second aspect, the target structured data is a data table or a database on the second big data platform.

In another possible implementation of the second aspect, the metadata of the target structured data includes an identity of the target structured data.

In another possible implementation of the second aspect, the metadata of the target structured data further includes one or more of the following: a version of the target structured data, a type of the target structured data, a partition identifier of the target structured data, the version of the target structured data, or the like.

In another possible implementation of the second aspect, the MetaStore is read, written, and queried by using a MetaStore service.

In another possible implementation of the second aspect, the target structured data is the data table or the database on the second big data platform.

In a possible implementation of the second aspect, the storage location of the target structured data in the second storage cluster is a storage location corresponding to the target directory.

**In** another possible implementation of the second aspect, the data in the target directory is from a first storage cluster, the first storage cluster belongs to a first data processing system, the first data processing system further includes a first computing cluster connected to the first storage cluster, and a first big data platform runs in the first computing cluster.

The method further includes:
receiving the metadata of the target structured data from the first computing cluster.

**In** another possible implementation of the second aspect, the metadata of the target structured data from the first computing cluster is in a first format. The method further includes:
converting the metadata of the target structured data in the first format into a format that can be identified by using a metadata service on the second big data platform.

**In** another possible implementation of the second aspect, the file system belongs to a global file system, and the first storage cluster and the second storage cluster each store a part of data of the global file system. The global file system provides a global message bus. The method further includes:
receiving the metadata of the target structured data from the first computing cluster through the global message bus.

**In** another possible implementation of the second aspect, the file system belongs to a global file system, and the first storage cluster and the second storage cluster each store a part of data of the global file system. The global file system provides a global message bus. The method further includes:
monitoring a message of the global message bus to obtain the data mobility information of the target directory in the file system.

In another possible implementation of the second aspect, the method further includes:
subscribing to data mobility information of a plurality of directories in the global file system from the global message bus, where the plurality of directories are directories respectively corresponding to a plurality of pieces of structured data.

In another possible implementation of the second aspect, the MetaStore into which the metadata of the target structured data is inserted is used for a service query for big data.

Optionally, the service query relates to a query for the target structured data.

Optionally, the second big data platform executes the service query for the big data.

According to a third aspect, an embodiment of this application provides a data mobility sensing apparatus, including an obtaining unit, a scanning unit, and a deletion control unit. The data mobility sensing apparatus is configured to implement the method described in any one of the first aspect.

Optionally, the data mobility sensing apparatus is deployed in a first data processing system. Optionally, the first data processing system includes a first storage cluster and a first computing cluster, the first computing cluster is connected to the first storage cluster, and a first big data platform runs in the first computing cluster.

In a possible implementation of the third aspect, the obtaining unit is configured to obtain data mobility information that is of a target directory in a file system and that is in the first storage cluster, where the data mobility information indicates that data in the target directory is migrated from the first storage cluster to a second storage cluster. The target directory is a directory, in the file system, corresponding to target structured data on the first big data platform.

The scanning unit is configured to scan a MetaStore on the first big data platform based on information about the target directory, to obtain metadata of the target structured data, where the metadata of the target structured data is used to describe an attribute of the target structured data. The MetaStore on the first big data platform includes respective metadata of a plurality of pieces of structured data on the first big data platform, and the plurality of pieces of structured data include the target structured metadata.

The deletion control unit is configured to: after the data in the target directory is migrated out of the first storage cluster, delete the metadata of the target structured data from the MetaStore on the first big data platform.

In a possible implementation of the third aspect, the metadata of the target structured data includes a storage location of the target structured data in the first storage cluster.

In a possible implementation of the third aspect, the storage location of the target structured data in the first storage cluster is a storage location corresponding to the target directory.

In another possible implementation of the third aspect, the target structured data is a data table or a database on the first big data platform.

In a possible implementation of the third aspect, the metadata of the target structured data includes an identity of the target structured data.

In a possible implementation of the third aspect, the metadata of the target structured data further includes one or more of the following: a version of the target structured data, a type of the target structured data, a partition identifier of the target structured data, the version of the target structured data, or the like.

In another possible implementation of the third aspect, the scanning unit is further configured to:
scan a storage location of each piece of structured data in the MetaStore on the first big data platform based on the information about the target directory, and use structured data whose storage location is target data as the target structured data.

In another possible implementation of the third aspect, the scanning unit is further configured to:
scan the MetaStore based on the information about the target directory by using a MetaStore service on the first big data platform.

In another possible implementation of the third aspect, the second storage cluster belongs to a second data processing system, the second data processing system further includes a second computing cluster connected to the second storage cluster, and a second big data platform runs in the second computing cluster.

The data mobility sensing apparatus further includes a communication unit, where the communication unit is configured to provide the second computing cluster with the metadata of the target structured data. Correspondingly, the second computing cluster may insert the metadata of the target structured data into a MetaStore on the second big data platform.

In another possible implementation of the third aspect, the target structured metadata is used to construct the target structured data.

In another possible implementation of the third aspect, the data mobility sensing apparatus includes a format conversion unit, where the format conversion unit is configured to convert the metadata of the target structured data into data in a first format.

The communication unit is configured to provide the second computing cluster with the data in the first format.

In another possible implementation of the third aspect, the file system belongs to a global file system, and the first storage cluster and the second storage cluster each store a part of data of the global file system. The global file system provides a global message bus.

The communication unit is further configured to send the metadata of the target structured data to the global message bus.

In another possible implementation of the third aspect, the file system belongs to the global file system, and the first storage cluster and the second storage cluster each store the part of data of the global file system. The global file system provides the global message bus.

The obtaining unit is further configured to:
monitor the global message bus to obtain the data mobility information of the target directory.

In another possible implementation of the third aspect, the data mobility sensing apparatus further includes the communication unit. The communication unit is configured to:
subscribe to data mobility information of a plurality of directories in the global file system from the global message bus, where the plurality of directories are directories respectively corresponding to the plurality of pieces of structured data in the global file system.

In another possible implementation of the third aspect, the MetaStore on the first big data platform from which the metadata of the target structured data is deleted is used for a service query for big data, and the service query does not relate to a query for the target structured data.

In another possible implementation of the third aspect, the obtaining unit is further configured to:
obtain metadata of a file in the target directory, where the metadata of the file in the target directory indicates a home device of the file in the target directory; and
when the home device of the file in the target node is not the first storage cluster, migrate the data in the target directory out of the first storage cluster.

In another possible implementation of the third aspect, the obtaining unit is further configured to:
obtain the metadata of the file in the target directory, where the metadata of the file in the target directory indicates storage layout information of the file in the target directory; and
when the storage layout information of the file in the target node does not include indication information of the first storage cluster, migrate the data in the target directory out of the first storage cluster.

According to a fourth aspect, an embodiment of this application provides a data mobility sensing apparatus, including an obtaining unit and an update unit. The data mobility sensing apparatus is configured to implement the method described in any one of the second aspect.

Optionally, the data mobility sensing apparatus is deployed in a second data processing system. Optionally, the second data processing system includes a second storage cluster and a second computing cluster, the second computing cluster is connected to the second storage cluster, and a second big data platform runs in the second computing cluster.

In a possible implementation of the fourth aspect, the obtaining unit is configured to obtain data mobility information of a target directory and/or metadata of target structured data.

In a possible implementation of the fourth aspect, the update unit is configured to: after the obtaining unit obtains the data mobility information of the target directory in a file system and obtains the metadata of the target structured data, insert the metadata of the target structured data into a MetaStore on the second big data platform. The data mobility information indicates that data in the target directory is migrated to the second storage cluster. The target directory is a storage directory corresponding to the target structured data in the second storage cluster. The metadata of the target structured data is used to describe an attribute of the target structured data.

In a possible implementation of the fourth aspect, the metadata of the target structured data includes a storage location of the target structured data in the second storage cluster.

In a possible implementation of the fourth aspect, the storage location of the target structured data in the second storage cluster is a storage location corresponding to the target directory.

In another possible implementation of the fourth aspect, the target structured data is a data table or a database on the second big data platform.

In another possible implementation of the fourth aspect, the metadata of the target structured data includes an identity of the target structured data.

In another possible implementation of the fourth aspect, the metadata of the target structured data further includes one or more of the following: a version of the target structured data, a type of the target structured data, a partition identifier of the target structured data, the version of the target structured data, or the like.

In another possible implementation of the fourth aspect, the MetaStore is read, written, and queried by using a MetaStore service.

In another possible implementation of the fourth aspect, the target structured data is the data table or the database on the second big data platform.

In another possible implementation of the fourth aspect, the data in the target directory is from a first storage cluster, the first storage cluster belongs to a first data processing system, the first data processing system further includes a first computing cluster connected to the first storage cluster, and a first big data platform runs in the first computing cluster.

The obtaining unit is further configured to:
receive the metadata of the target structured data from the first computing cluster.

In another possible implementation of the fourth aspect, the metadata of the target structured data from the first computing cluster is in a first format. The data mobility sensing apparatus further includes a format conversion unit, where the format conversion unit is configured to convert the metadata of the target structured data in the first format into a format that can be identified by using a metadata service on the second big data platform.

In another possible implementation of the fourth aspect, the file system belongs to a global file system, and the first storage cluster and the second storage cluster each store a part of data of the global file system. The global file system provides a global message bus. The obtaining unit is further configured to:
receive the metadata of the target structured data from the first computing cluster through the global message bus.

In another possible implementation of the fourth aspect, the file system belongs to the global file system, and the first storage cluster and the second storage cluster each store the part of data of the global file system. The global file system provides the global message bus. The obtaining unit is further configured to:
monitor a message of the global message bus to obtain the data mobility information of the target directory in the file system.

In another possible implementation of the fourth aspect, the data mobility sensing apparatus further includes a communication unit. The communication unit is configured to:
subscribe to data mobility information of a plurality of directories in the global file system from the global message bus, where the plurality of directories are directories respectively corresponding to a plurality of pieces of structured data.

In another possible implementation of the fourth aspect, the MetaStore into which the metadata of the target structured data is inserted is used for a service query for big data.

Optionally, the service query relates to a query for the target structured data.

Optionally, the second big data platform executes the service query for the big data.

According to a fifth aspect, an embodiment of this application provides a data storage system. The data storage system includes a first data processing system, the first data processing system includes a first computing cluster and a first storage cluster, the first computing cluster is connected to the first storage cluster, and a first big data platform runs in the first computing cluster. The first data processing system includes a first data mobility sensing apparatus, and the first data mobility sensing apparatus is the data mobility sensing apparatus in any one of the third aspect.

In a possible implementation of the fifth aspect, the first data mobility sensing apparatus may be located in the first computing cluster.

In another possible implementation of the fifth aspect, the data storage system further includes a second data processing system. The second data processing system includes a second computing cluster and a second storage cluster, the second computing cluster is connected to the second storage cluster, a second big data platform runs in the second computing cluster. The second data processing system includes a second data mobility sensing apparatus, and the second data mobility sensing apparatus is the data mobility sensing apparatus in any one of the fourth aspect.

In another possible implementation of the fifth aspect, the second data mobility sensing apparatus may be located in the second computing cluster.

According to a sixth aspect, an embodiment of this application provides a computing device. The computing device includes a processor and a memory. The processor is configured to execute a computer program or instructions stored in the memory, to implement the method described in any one of the first aspect or implement the method described in any one of the second aspect.

Optionally, the computing device further includes a communication interface. The communication interface is configured to receive and/or send data, and/or the communication interface is configured to provide input and/or output for the processor.

It should be noted that the foregoing embodiment is described by using an example in which the processor (or referred to as a general-purpose processor) that performs the method by invoking computer instructions is used. In a specific implementation process, the processor may alternatively be a dedicated processor. In this case, the computer instructions have been pre-loaded in the processor. Optionally, the processor may further include both a dedicated processor and a general-purpose processor.

Optionally, the processor and the memory may be further integrated into one component. In other words, the processor and the memory may be further integrated together.

According to a seventh aspect, an embodiment of this application further provides a computing device cluster. The computing device cluster includes at least one computing device, and each computing device includes a processor and a memory.

The processor of the at least one computing device is configured to execute instructions stored in the memory of the at least one computing device, to enable the computing device cluster to perform the method described in any one of the first aspect, or perform the method described in any one of the second aspect.

According to an eighth aspect, an embodiment of this application provides a computer-readable storage medium, configured to store instructions or a computer program.

When the instructions or the computer program is executed, the method described in any one of the first aspect is implemented, or the method described in any one of the second aspect is implemented.

According to a ninth aspect, this application provides a computer program product. The computer program product includes instructions or a computer program. When the instructions or the computer program is executed, the method described in any one of the first aspect is implemented or the method described in any one of the second aspect is implemented.

Optionally, the computer program product may be a software installation package or an image package. When the foregoing method needs to be used, the computer program product may be downloaded and executed on a computing device.

Alternatively, the computer program product may be combined in a hardware device (for example, a network interface card or a hard disk), and a computing device may use the computer program product by connecting to the hardware device.

For beneficial effects of the technical solutions provided in the second aspect to the ninth aspects of this application, refer to beneficial effects of the technical solution in the first aspect. Details are not described herein again.

### BRIEF DESCRIPTION OF DRAWINGS

The following briefly describes the accompanying drawings that need to be used in describing embodiments.
FIG. 1A is a schematic diagram of a storage manner of structured data according to an embodiment of this application;
FIG. 1B is a schematic diagram of an architecture of a service system of a cross-data processing system according to an embodiment of this application;
FIG. 2A is a schematic diagram of a structure of a data processing system according to an embodiment of this application;
FIG. 2B is a schematic diagram of a structure of another data processing system according to an embodiment of this application;
FIG. 3 is a schematic diagram of an architecture of a global file system according to an embodiment of this application;
FIG. 4 is a schematic flowchart of a data mobility sensing method according to an embodiment of this application;
FIG. 5 is a schematic diagram of a MetaStore according to an embodiment of this application;
FIG. 6 is a schematic diagram of another MetaStore according to an embodiment of this application;
FIG. 7 is a schematic diagram of running of a service system according to an embodiment of this application;
FIG. 8 is a schematic diagram of a structure of a data mobility sensing apparatus according to an embodiment of this application;
FIG. 9 is a schematic diagram of a structure of another data mobility sensing apparatus according to an embodiment of this application; and
FIG. 10 is a schematic diagram of a structure of a computing device according to an embodiment of this application.

### DESCRIPTION OF EMBODIMENTS

The following first describes a storage manner of structured data in embodiments of this application.

The structured data, also referred to as row data, is data logically expressed and implemented by using a two-dimensional table structure. The structured data in embodiments of this application may include data that has rows and columns, such as a database, a data table, or a correspondence set.

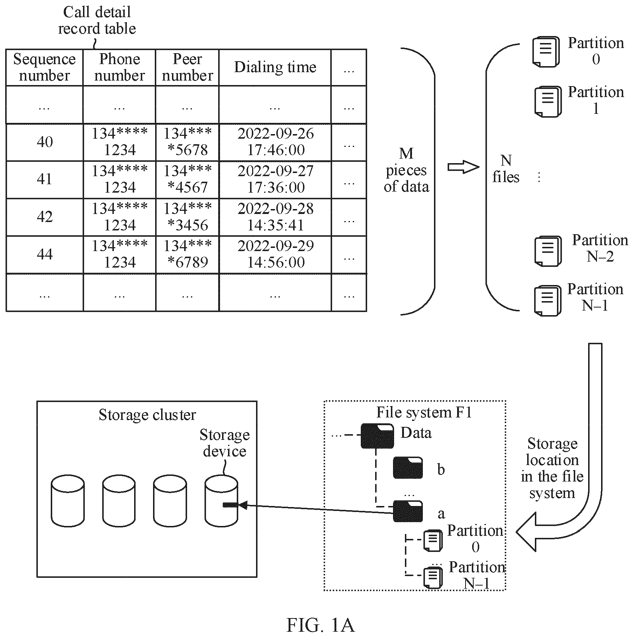

In embodiments of this application, the structured data may be split into a plurality of partitions for storage. For example, FIG. 1A is a schematic diagram of a possible storage manner of structured data according to an embodiment of this application. A call detail record table is a type of structured data, including a plurality of columns (or referred to as attributes). The attribute is, for example, a sequence number, a phone number, a peer number, or dialing time. Each row is referred to as a tuple. For example, a tuple in a sequence number 40 includes a plurality of values. Certainly, attributes and values of the attributes shown in FIG. 1A are merely examples, and are not intended to limit embodiments of this application.

When the table is stored, data in the table can be stored in a file manner. For example, in some scenarios, the data in the table is converted, in a column storage manner, into a file for storage. A quantity of tuples of the table may be enormous. Therefore, when the data of the table is stored, the table may be split into a plurality of partitions (partitions), and each partition is converted into one file. As shown in FIG. 1A, the call detail record table includes M pieces of data. In this case, the data in the table may be split into N files for storage, and each file corresponds to one partition. For example, the files are respectively represented as a partition 0 to a partition N-1.

The data in the table may be converted into one or more files. For a better unified storage manner, in an actual process, the data in the table is usually stored in a form of a directory. The directory may include one or more files. As shown in FIG. 1A, the N files obtained by splitting the data in the call detail record table are stored in a directory data/a.

The directory and the files are included in a file system, and have corresponding paths in the file system. A file system F1 shown in FIG. 1A includes the directory data/a, and a path of the directory data/a is ".../data/a". In physical storage, the directory usually points to a physical storage location (for example, an address of a piece of storage space on a storage device in a storage cluster) in the storage cluster. For a service application, data in the directory may be read from the storage cluster based on the path of the directory. For example, data content in the N files (that is, N partitions) that are converted from the call detail record table may be obtained by reading data of the data/a. During query, original data of the structured data may be constructed based on the data in the directory. For example, the data in the call detail record table may be constructed based on the data content in the N files.

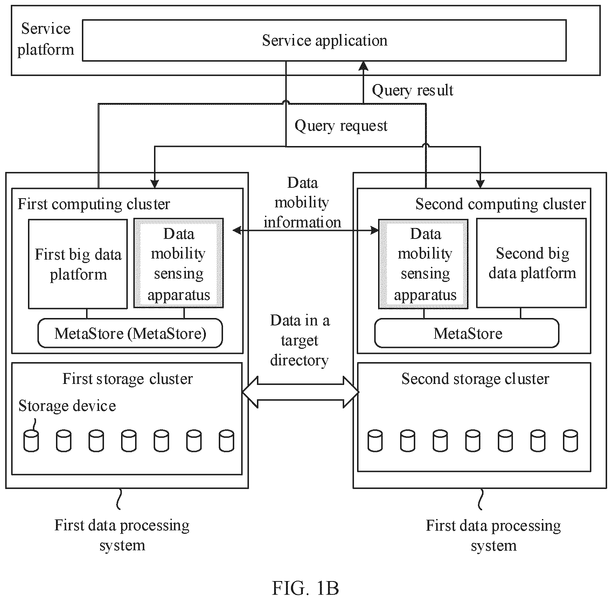

The following describes an architecture of embodiments of this application. It should be noted that the system architecture and the service scenario described in this application are intended to describe the technical solutions in this application more clearly, and do not constitute a limitation on the technical solutions provided in this application. A person of ordinary skill in the art may know that with evolution of the system architecture and emergence of a new service scenario, the technical solutions provided in this application are also applicable to a similar technical problem. FIG. 1B is a schematic diagram of an architecture of a service system of a cross-data processing system according to an embodiment of this application. A service application is deployed on a service platform. The service platform may be a physical platform (for example, a desktop computer, a server, or a host) or a virtual platform (for example, a virtual machine, a container, or a cloud). The service application is for implementing service logic. Data is often accessed during implementing the service logic.

Structured data generated on the service platform may be stored in the storage system, and the storage system may include one or more data processing systems. As shown in FIG. 1B, a first data processing system and a second data processing system may belong to one storage system.

The data processing system may include a computing cluster and a storage cluster, has a computing capability, and can provide storage space. For example, the data processing system may be a disk-controller integrated storage system, a distributed storage system, a data center, or the like.

The storage cluster provides the storage space and includes one or more storage devices. The storage device includes but is not limited to a solid-state drive, a magnetic disk, or the like. In some scenarios, the storage device further includes a controller, and the controller is configured to control reading/writing of the data on the storage device.

The computing cluster has the computing capability. The computing cluster is usually connected to the service platform, and can implement numerous functions related to data on the service platform. A big data platform may run in the computing cluster, and some service functions of big data may be implemented by using the big data platform.

A data query function is used as an example for description. A query request (for example, which may be a query request of the big data) initiated by the service application reaches a computing cluster in each data processing system. The big data platform in the computing cluster queries data in the data processing system based on the query request, and provides the service application with an obtained query result. During query execution, a query object is structured data of the service system. Specifically, the big data platform accesses data in a directory of the data processing system, and constructs the structured data based on the data in the directory, to query the structured data. FIG. 1A is used as an example. When the query request relates to a query for the call detail record table, the big data platform constructs the call detail record table based on the data in the directory data/a, and executes the query for the call detail record table to obtain a query result.

In a service system that includes a plurality of data processing systems, because data often moves between a plurality of storage clusters, local data of each data processing system is often in a changing state. For example, data stored in a first storage cluster of the first data processing system may be migrated (or tiered) to a second storage cluster of the second data processing system. When data often moves between a plurality of devices, how to enable the big data platform to accurately and efficiently query data in a local data processing system is an urgent problem to be resolved currently.

In embodiments of this application, metadata of locally stored structured data is recorded by using a MetaStore (MetaStore), to reflect which pieces of structured data are locally stored. For example, a MetaStore on a first big data platform shown in FIG. 1B records metadata of structured data stored in the first data processing system, and a MetaStore on a second big data platform records metadata of structured data stored in the second data processing system. In this way, the big data platform senses local data by using the MetaStore. This facilitates providing a data service, for example, a data query or data migration.

The data query is used as an example. When the first big data platform executes a query, it may be identified, by using the MetaStore, that the structured data stored in the first data processing system is stored in the first data processing system, and a storage location is a target directory. Therefore, the first big data platform may access data in the target directory by using the MetaStore, construct target structured data by using the data in the target directory, and query the target structured data to obtain a query result. Because data often moves, the MetaStore needs to be updated in a timely manner during data mobility. In embodiments of this application, a data mobility sensing apparatus is disposed to update the MetaStore, to ensure accuracy of the MetaStore.

A data mobility sensing apparatus shown in FIG. 1B can monitor data mobility information, and update the MetaStore based on the data mobility information. The data mobility information indicates that the data moves between a plurality of data storage systems, for example, may indicate that the data is migrated out of a storage cluster of a data processing system, or the data is migrated into a storage cluster of a data processing system.

For example, in the system shown in FIG. 1B, the data in the target directory is a directory corresponding to the target structured data in a file system. When the data in the target directory is migrated from the second storage cluster to the first storage cluster, the data mobility information indicates that the data in the target directory is migrated to the first storage cluster. A data mobility sensing apparatus in a first computing cluster adds metadata of the target structured data (where what is stored in the foregoing target directory is the target structured data, for example, data in a data table) to the MetaStore on the first big data platform (that is, a MetaStore connected to the first big data platform in FIG. 1B). When the service application initiates the query request, the query request reaches the first big data platform in the first data processing system, and the first big data platform identifies metadata of the target structured data based on an updated MetaStore, so that a query for the target structured data is related to in a query process (where a query for the data in the target directory is correspondingly related to). Therefore, in embodiments of this application, a problem of missing detection of the local data caused because a computing device does not sense locality of data in a data mobility process is resolved, thereby improving query efficiency and ensuring correctness of a query result.

Similarly, when the data in the target directory is migrated out of the second storage cluster, a data mobility sensing apparatus in a second computing cluster deletes the metadata of the target structured data from the MetaStore on the second big data platform. When the service application initiates the query request, the query request reaches the second data processing system, and the second big data platform executes a query. Because the updated MetaStore does not include the metadata of the target structured data, a query for the target structured data is not related to in the query process (because data of the target structured data is stored in a target directory of the second storage cluster, the query does not relate to a query for a target directory that has been migrated out and that is in the first storage cluster). Therefore, in embodiments of this application, a problem that another data processing system is accessed in the data query because the locality of the data cannot be sensed in the data mobility process is resolved, thereby ensuring the correctness of the query result and stability of the query efficiency.

In conclusion, in embodiments of this application, the mobility sensing apparatus senses the data mobility, and updates the MetaStore on the big data platform based on the data mobility, so that in a cross-device query process, each data processing system can sense the locality of the data and query the local data, to ensure the correctness of the query result and the stability of the query efficiency.

It should be understood that in the service system shown in FIG. 1A, the computing cluster in the data processing system includes one or more computing devices. These computing devices may be implemented by using software and/or hardware.

An example in which the computing device is implemented by using the hardware is used. The computing device may include a controller, a processor, a server, or the like. The controller includes but is not limited to a storage controller (for example, a memory controller, a hard disk controller, an integrated drive, an electronic controller, or a disk array controller), a combined logic controller, a hardwired controller, or the like. The processor includes but is not limited to a central processing unit (central processing unit, CPU), a data processing unit (data processing unit, DPU), a graphics processing unit (graphics processing unit, GPU), an artificial intelligence unit (artificial intelligence processor, AIU), a microprocessor (microprocessor), a programmable logic gate array (field programmable gate array, FPGA), or the like. In addition, in some scenarios, because the controller also has a computing capability and/or can execute instructions, the controller may also be considered as the processor. The server includes but is not limited to a general-purpose computer, a storage server, a cloud server, a blade server, or the like. When a function of the computing device is implemented by the server, the computing device may include one or more servers (for example, a server cluster).

In a possible solution, the function implemented by the computing device may be implemented by using a software functional unit. For example, the computing device may be the virtual machine, the container, or the cloud. The virtual machine is a software-simulated computer system that has a complete hardware system function and that runs in an isolated environment. The container is the isolated environment obtained by packaging an application and an application dependency package. The cloud is a software platform on which an application virtualization technology is used, and can enable one or more pieces of software and the application to be developed and run in an independent virtualization environment. Optionally, the cloud may be deployed on a public cloud, a private cloud, a hybrid cloud, or the like.

In an example of the software functional unit, the computing device may include code run on a compute instance. The compute instance may include at least one of a physical host (the computing device), the virtual machine, and the container.

It should be understood that the computing cluster and the storage cluster that are in the data processing system are connected to each other, and a connection manner of the computing cluster and the storage cluster may be a bus, a network, or the like. The network is, for example, a wired network, a wireless network, or a combination of the wired network and the wireless network. For example, the computing cluster and the storage cluster may be connected through a network cable, or connected through a switch.

It should be noted that FIG. 1B shows an example architecture provided for ease of understanding, and is not intended to limit embodiments of this application. In a specific implementation process, a deployment manner and a query implementation that are of each apparatus in the service system may alternatively be designed in another manner.

In a possible implementation, the query request initiated by the service application first reaches a specified data processing system (for example, the first data processing system), and the first data processing system distributes the query request to another data processing system. After querying the local data based on the query request, each data processing system returns a query result to the first data processing system. The first data processing system summarizes the query result returned by each data processing system, obtains a final query result, and returns the final query result to the service application. In this implementation, query distribution and query result summarization are implemented by using a specified data processing system, so that the service application can query data in a multi-data processing system as simple as querying data in a singledata processing system, to simplify a function of the service application. Therefore, running efficiency and response time that are of the service application are improved, and user experience is improved.

In a possible implementation, the big data platform is, for example, an openLookeng instance.

For example, in the service system of the cross-data processing system, the data is stored in storage clusters in a plurality of data processing systems. In this case, the openLookeng instance is deployed in each of the plurality of data processing systems. Certainly, it is not limited herein that one data processing system corresponds to one openLookeng instance. To be specific, a case in which a plurality of openLookeng instances are deployed in one data processing system, or the plurality of data processing systems jointly correspond to a case of one openLookeng instance may exist. When a query is executed, a query request of a service application is sent to a specified openLookeng instance (for example, an openLookeng instance located in the first data processing system), and then the first data processing system distributes the query request to another openLookeng instance. The another openLookeng instance and the openLookeng instance in the first data processing system separately query the local data, and the openLookeng instance in the first data processing system summarizes query results, and returns a final result to the service application.

In a possible implementation, the data mobility sensing apparatus and/or the data query apparatus shown in FIG. 1B may be implemented by using software and/or hardware.

In an example in which the mobility sensing apparatus is implemented by using the hardware, the data mobility sensing apparatus may be a controller, a processor, an intelligent network interface card, or the like, or the data mobility sensing apparatus may be implemented through a device such as a server or a host. For example, the data mobility sensing apparatus is deployed on the computing device or the storage device in a form of the CPU, the DPU, or the FPGA, for example, deployed on a computing device in the first computing cluster or the second computing cluster in FIG. 1B.

In an example in which the mobility sensing apparatus is implemented by using the software, the data mobility sensing apparatus is implemented by using the virtual machine, the container, or the like, or is deployed in the cloud. For example, the data mobility sensing apparatus may be deployed in the computing cluster or the storage cluster in a manner of a software service process. For example, the data mobility sensing apparatus may include a computer program or computer instructions that are run in the virtual machine, the container, or the cloud.

Further, optionally, the data mobility sensing apparatus may be located outside the big data platform. In other words, the data mobility sensing apparatus and the big data platform have different processes. As shown in FIG. 1B, the data mobility sensing apparatus is deployed outside the big data platform in the computing cluster.

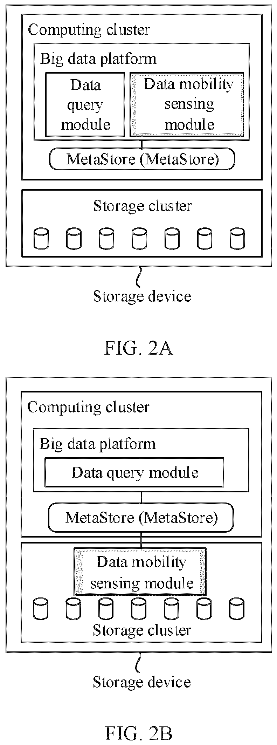

Alternatively, optionally, the data mobility sensing apparatus may be alternatively deployed on the big data platform. FIG. 2A is a schematic diagram of a structure of another data processing system according to an embodiment of this application. A data mobility sensing apparatus is integrated on a big data platform. For example, the data mobility sensing apparatus is a plug-in on the big data platform.

Optionally, the data mobility sensing apparatus may be alternatively deployed in a storage cluster. FIG. 2B is a schematic diagram of a structure of another data processing system according to an embodiment of this application. A data mobility sensing apparatus is integrated in a storage cluster. In this case, the data mobility sensing apparatus may be used by a user as a general basic service in the storage cluster, and is not limited to a cross-domain query scenario. The data mobility sensing apparatus is more flexibly used.

For example, an upper-layer application (application, APP) may more quickly learn key information in a data migration process by using the data mobility sensing apparatus, without needing to pay attention to implementation details of data mobility, to improve convenience of managing data in a storage device.

In a possible implementation, a first data processing system is located in a first data center, a second data processing system is located in a second data center, and the first data center and the second data center are different data centers. In other words, the foregoing implementation may be applied to the cross-domain query scenario, to improve correctness and stability of a cross-domain query request result.

In some scenarios, data in the first data processing system and data in the second data processing system belong to a global file system (global file system, GFS). The GFS, also referred to as a federated file system, can unite a plurality of file systems in a plurality of data processing systems, and provide a union view (or referred to as a global file view) of the plurality of file systems. The user can access data of a file in any device in the global file system based on the union view by loading the union view of the plurality of file systems in any device.

The GFS provides an application of a cross-data processing system (for example, a cross-data center) with a unified file system namespace and a global directory structure view. A service application does not need to sense a data location, and a unified global file view and attribute can be seen from any device that accesses the global file system. When an application performs reading/writing on a non-local file, the GFS automatically loads data from a remote end to a local end. Local data and non-local data are not distinguished from each other at an application level. A response speed depends on network bandwidth and latency between devices. Further, the GFS may configure a data tiering policy, so that data is automatically migrated between different devices.

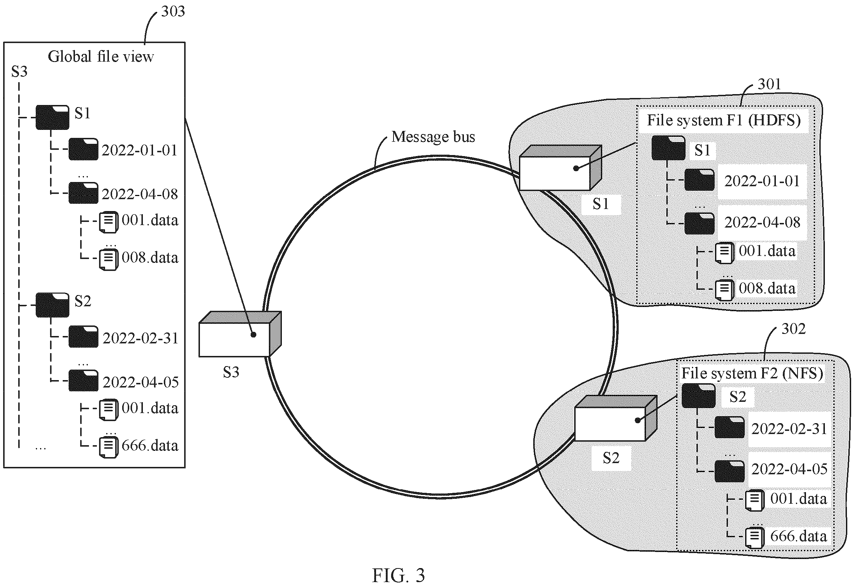

FIG. 3 is a schematic diagram of an architecture of a global file system according to an embodiment of this application. A GFS unites file systems in a data processing system S1, a data processing system S2, and a data processing system S3 (referred to as S1, S2, and S3 for short in the following descriptions), and provides a global file view. In other words, S1, S2, and S3 access the global file system.

Data of a file system F1 is stored in S1 (as shown in an area 301), and data of a file system F2 is stored in S2 (as shown in an area 302). Optionally, a type of the file system F1 and a type of the file system F2 may be different. In other words, a storage device S1 and a storage device S2 may be heterogeneous. For example, a file system in S1 is a Hadoop distributed file system (Hadoop distributed file system, HDFS), and a file system in S2 is a network file system (network file system, NFS).

The file system in S1 and the file system in S2 are united, and a global file view of the global file system obtained by uniting the file system in S1 and the file system in S2 is shown in an area 303. After the global file view is loaded in a device, data of a file in any device in the global file system can be accessed. For example, if loading the global file view in S3, a user may access data in files in S1 and S2. However, if accessing non-local data, the user still needs to obtain the data from a remote end.

In a possible design, the GFS provides a message bus, and the message bus is used to transfer a message between devices. For example, the message bus may be used to synchronize metadata of a file system between devices. Optionally, the message bus implements a function of the message bus via a cross-device network.

Further, the GFS further provides a data mobility bus (not shown in FIG. 3) for data to move between devices according to a policy or as required. Optionally, the data mobility bus implements a function of the data mobility bus via a cross-device network.

A device that accesses the global file system loads data by using the global file view without sensing whether the data is local data. In this case, the data from the remote end is accessed in a data query process. In a data query scenario, this easily causes excessively long data response time, and query performance is degraded. However, according to the solutions in this embodiment of this application, the device that accesses the global file system can maintain a MetaStore on a big data platform by using a mobility sensing apparatus, so that each device can sense locality of the data and query the local data based on the MetaStore on the big data platform that is updated in time, thereby ensuring correctness of a query result and stability of query efficiency.

The foregoing describes the architectures of embodiments of this application, and the following describes in detail the method in embodiments of this application.

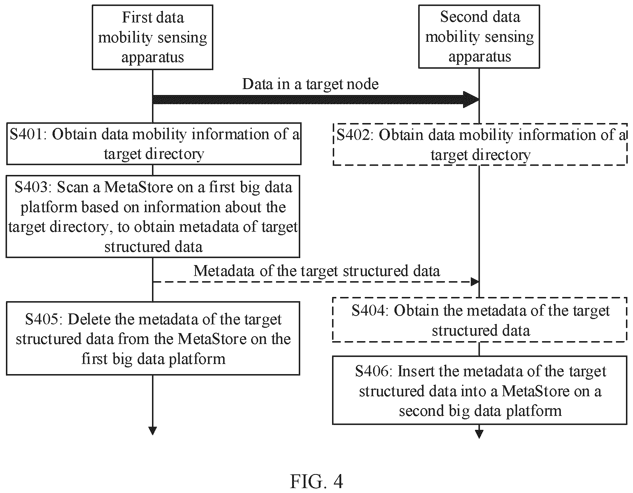

FIG. 4 is a schematic flowchart of a data mobility sensing method according to an embodiment of this application. Optionally, the method may be applied to the foregoing system or apparatus, for example, applied to the service system or the data mobility sensing apparatus shown in FIG. 1B, applied to the data processing system shown in FIG. 2A or FIG. 2B, or applied to the global file system shown in FIG. 3. The following uses an example in which an execution body is a data mobility sensing apparatus for description. In a case in which the method is applied to another body, this application is equally applicable.

The data mobility sensing method shown in FIG. 4 may include one or more steps in step S401 to step S406. It should be understood that for ease of description, in this application, a sequence of S401 to S406 is used for description, and this is not intended to limit to perform the steps in the foregoing sequence. A performing sequence, performing time, a quantity of performing times, and the like of the one or more steps are not limited in embodiments of this application.

Step S401 to step S406 are specifically as follows:

Step S401: A first data mobility sensing apparatus obtains data mobility information of a target directory.

The first data mobility sensing apparatus may be deployed in a computing cluster in a data processing system. For ease of description, the data processing system in which the first data mobility sensing apparatus is deployed is referred to as a first data processing system, and a data cluster in which the first data mobility sensing apparatus is located is, for example, referred to as a first computing cluster.

The target directory may include one or more files and/or one or more directories. Data in the target directory is data generated by converting structured data into a file that is suitable for storage. In other words, the target directory is a directory corresponding to the target structured data in a file system. For example, as shown in FIG. 1A, the call detail record table is converted into a plurality of pieces of partition data, and the plurality of pieces of partition data are included in the directory data/a. Certainly, in a specific implementation process, one piece of structured data may be converted into data in a plurality of directories. Optionally, the target structured data is one or more of a plurality of pieces of structured data on a first big data platform.

In a possible implementation, a storage location of the target structured data in a first storage cluster is a storage location corresponding to the target directory. Specifically, a path of the target directory corresponds to a storage location in the first storage cluster. Therefore, after the target structured data is converted into a file in the target directory, the storage location corresponding to the target directory is the storage location of the target structured data in the first storage cluster. In some other possible implementations, the target structured data may be included in a plurality of directories. In this case, the storage location of the target structured data includes storage locations corresponding to the plurality of directories. In still some other possible implementations, in addition to the target structured data, other data may be stored in the storage location of the target directory.

It should be noted that the storage location may be logical or physical. When the storage location is a logical location, the storage location of the target structured data may be understood as the target directory (or a path of the target directory in the file system). Because the target directory physically points to a piece of storage space in a storage device, when the storage location is a physical location, the storage location of the target structured data may be understood as a storage location (that is, a physical storage address) corresponding to the target directory in a storage cluster. The physical storage location and the logical storage location are descriptions, in different dimensions, of a same piece of space. In some scenarios, the physical storage location and the logical storage location may be replaced with each other in terms of description. This is not described one by one in the following descriptions.

The data in the target directory is stored in the first storage cluster (for example, a source storage cluster). For example, a file system is deployed in the first storage cluster, and the target directory belongs to the file system in the first storage cluster.

The data in the target directory can move between a plurality of storage clusters. For example, in a possible scenario, according to a data tiering policy, hotspot data needs to be migrated to a storage cluster with a higher access speed, or data with lower access frequency needs to be migrated to a storage cluster with a larger capacity. Data migration is a case of data mobility.

The data mobility may be indicated by using data mobility information. For example, the data mobility information of the target directory may indicate that the data in the target directory is migrated from the first storage cluster to a second storage cluster (for example, a destination storage cluster).

In an example of content of the data mobility information, the data mobility information of the target directory may include an identifier of the target directory, an identifier of the first storage cluster, and an identifier of the second storage cluster. The identifier of the target directory indicates a directory in which a current migration is performed, and may be an inode number of the directory, a name of the directory, an access path of the directory, or the like. The identifier of the first storage cluster indicates a source storage cluster of the current migration. The identifier of the second storage cluster indicates a destination storage cluster of the current migration.

In another example of the content of the data mobility information, the first storage cluster belongs to the first data processing system, and the second storage cluster belongs to a second data processing system. When the target directory is migrated from the first storage cluster to the second storage cluster, the data mobility information of the target directory may include the identifier of the target directory, an identifier of the first data processing system, and an identifier of the second data processing system. The identifier of the first data processing system indicates a data processing system in which a source storage cluster of a current migration is located, and the identifier of the second data processing system indicates a data processing system in which a destination storage cluster of the current migration is located. In a possible implementation, the first storage cluster and the second storage cluster access a global file system. The global file system may initiate mobility, from the first storage cluster to the second storage cluster, of the data in the target directory, and push a directory migration message to a global message bus. The directory migration message may be considered as the data mobility information. The first data mobility sensing apparatus may detect the directory migration message from the global message bus by monitoring the global message bus.

Optionally, the first data mobility sensing apparatus may subscribe to data mobility information of a plurality of directories in the global file system from the global message bus, where the plurality of directories include the target directory. Further, the plurality of directories may be directories that respectively correspond to a plurality of pieces of structured data on a big data platform and that are in the global file system.

Optionally, the embodiment shown in FIG. 4 further includes step S402. "Optionally" herein may be understood as: A second data mobility sensing apparatus may perform step S402, or may not perform step S402. Step S402 is specifically as follows:

Step S402: The second data mobility sensing apparatus obtains data mobility information of a target directory.

Specifically, the second data mobility sensing apparatus is deployed in the second data processing system, for example, deployed in a second computing cluster in the second data processing system.

The data mobility information of the target directory indicates that the data in the target directory is migrated to the second storage cluster, and the second storage cluster is included in the second data processing system and is connected to the second computing cluster.

It should be understood that content of the data mobility information obtained by the second data mobility sensing apparatus may be the same as or different from the content of the data mobility information obtained by the first data mobility sensing apparatus in step S401.

In a possible design, when or before the data in the target directory starts to be migrated, the first data mobility sensing apparatus may receive information indicating that the data in the target directory is to be migrated from the first storage cluster to the second storage cluster. After the data reaches the second storage cluster, the second data mobility sensing apparatus receives information indicating that the data in the target directory is migrated to the second storage cluster.

In another possible design, the second data mobility sensing apparatus may further receive a MetaStore update message. The MetaStore update message indicates the second data mobility sensing apparatus to update a MetaStore on the big data platform.

When the data mobility occurs in a lower-layer storage cluster, a MetaStore on an upper-layer big data platform is correspondingly updated. Therefore, the data mobility information may alternatively be considered as a type of MetaStore update message.

Similarly, when the MetaStore update message is received, it indicates that the data mobility may occur in the lower-layer storage cluster. Therefore, when the MetaStore update message includes a directory of data that moves, and a destination storage cluster and/or a source storage cluster in which the data mobility occurs, the MetaStore update message may alternatively be considered as a type of data mobility information.

In this application, information and naming of information are mainly example names provided for describing a function of the information and a parameter included in the information, and do not limit embodiments of this application. In a specific implementation process, a name of a message and/or a name of the information may be randomly replaced.

Step S403: The first data mobility sensing apparatus scans a MetaStore on the first big data platform based on information about the target directory, to obtain metadata of the target structured data.

Specifically, the information about the target directory is, for example, the inode number of the target directory, the name of the target directory, or the access path of the target directory. The access path herein may be a complete access path, or may be a part of the complete access path. For example, the complete access path of the target directory includes an absolute path and a relative path. The relative path can be used for scanning.

The MetaStore on the first big data platform includes respective metadata of a plurality of pieces of structured data (that is, includes a plurality of pieces of metadata, where the plurality of pieces of metadata belong to the plurality of pieces of structured data), and the metadata of the structured data is used to describe an attribute of the target structured data. For example, the metadata of the structured data includes but is not limited to a name of the structured data, a storage location of the structured data in the first storage cluster, a version of the structured data, a type of the structured data, and a partition (partition) identifier of the structured data.

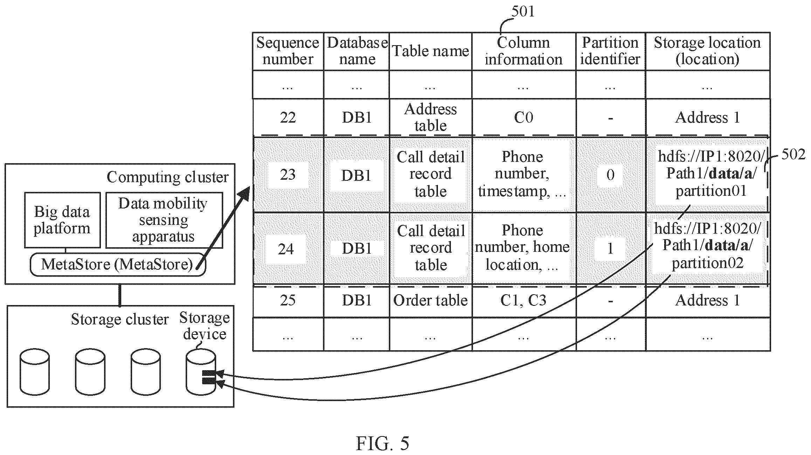

FIG. 5 is a schematic diagram of a possible MetaStore according to an embodiment of this application. Metadata of a piece of structured data included in a MetaStore on a data platform is shown in an area 501. Attributes in the metadata include a sequence number, a database name, a table name, column information, a partition identifier, a storage location, and the like. A call detail record table is used as an example. Metadata of the call detail record table includes a plurality of pieces of metadata, and each piece of metadata corresponds to one partition of the call detail record table. For example, a name of a database in which the call detail record table is located is DB1, the table name is a "call detail record table", and the column information includes column information in the call detail record table. The partition identifier indicates that current metadata is metadata of which partition (for example, 0 indicates a partition 0). The storage location indicates a storage location of a file in the partition in a storage cluster. For example, "hdfs://IP1:8020/Path1/data/a/partition01" indicates a file path of a file in the partition in a file system. Because the file system is deployed in the storage cluster, a storage location of the file in the partition may be physically found by using the file path. During scanning, a first data mobility sensing apparatus may scan, by using information about a target directory, metadata corresponding to target structured data in a MetaStore on a big data platform. FIG. 5 is used as an example. A result shown in an area 502 may be obtained by scanning the MetaStore by using "data/a". In other words, when the directory data/a is moved, two partitions shown in the area 502 are moved to another storage cluster.

In some scenarios, a first big data platform may provide a MetaStore service. The MetaStore service is used to manage a MetaStore, and provide addition, deletion, a query, modification, or the like of the MetaStore. In a possible implementation, the first data mobility sensing apparatus may scan the MetaStore on the first big data platform based on the information about the target directory by using the MetaStore service on the first big data platform. For example, the first data mobility sensing apparatus provides the information about the target directory to the MetaStore service, and receives metadata of the target structured data that is returned by the MetaStore service.

In a possible implementation, the first data mobility sensing apparatus may provide the metadata of the target structured data for a second computing cluster, or specifically provide the metadata of the target structured data for a second data mobility sensing apparatus in the second computing cluster, that is, a computing cluster that is in a second data processing system and in which a second storage cluster (a destination storage cluster) is located.

Optionally, when the metadata of the target structured data is provided, the metadata of the target structured data may be converted into a format suitable for transmission, and then be provided to the second computing cluster.

For example, the metadata of the target structured data is converted into storage mapping data in a first format. The first format herein includes but is not limited to a format such as a JavaScript object notation (JavaScript object notation, JSON) format, a YAML (a type of data serialization format), or an extensible markup language (extensible markup language, XML) format.

In some scenarios, a first data processing system and the second data processing system access a global file system. The global file system provides a message bus. The first data mobility sensing apparatus may send the metadata (or data on which format conversion is performed) of the target structured data to a global message bus, so that the second data processing system obtains the metadata from the global message bus.

In a possible implementation, the first data mobility sensing apparatus may provide the metadata of the target structured data to the second data processing system after data in the target directory is migrated out of a first storage cluster.

In a possible implementation, the first data mobility sensing apparatus may check a local attribute state of the target directory. When the local attribute state of the target directory indicates that the target directory is non-local, the metadata of the target structured data is provided to the second data processing system.

In a possible design, the first data mobility sensing apparatus may periodically or aperiodically check the local attribute state of the target directory. For example, the check is performed every 1s.

In some scenarios, metadata of a file in the target directory indicates a home device of the file in the target directory. The first data mobility sensing apparatus may obtain the metadata of the file in a target directory. When a home device of the file in the target node is not the first storage cluster or the first data processing system, it indicates that the data in the target directory is migrated out of the first storage cluster or the first data processing system.

In some scenarios, the metadata of the file in the target directory indicates storage layout information of the file in the target directory. The first data mobility sensing apparatus may obtain the metadata of the file in the target directory. When storage layout information of the file in the target node does not include indication information of the first storage cluster, it indicates that the data in the target directory is migrated out of the first storage cluster.

Optionally, the embodiment shown in FIG. 4 further includes step S404. "Optionally" herein may be understood as: The second data mobility sensing apparatus may perform step S404, or may not perform step S404. Step S404 is specifically as follows:
Step S404: The second data mobility sensing apparatus obtains the metadata of the target structured data.

Optionally, the metadata of the target structured data is from the first computing cluster, for example, from a first data mobility sensing apparatus in the first computing cluster.

In some scenarios, the second data processing system in which the second data mobility sensing apparatus is located accesses the global file system, and the second data mobility sensing apparatus may obtain the metadata of the target structured data from the global message bus.

In a possible design, the metadata of the target structured data from the first computing cluster is in the foregoing first format. The second data mobility sensing apparatus converts the metadata of the target structured data in the first format into a format that can be identified by using a metadata service on the second big data platform.

For example, the second data mobility sensing apparatus receives the metadata of the target structured data in the first format, and converts the metadata of the target structured data from the first format into a table data structure of the MetaStore, that is, converts the metadata of the target structured data into a format that can be identified by a metadata service (the MetaStore service) on the big data platform.

Optionally, the second data mobility sensing apparatus detects the MetaStore update message through monitoring, to obtain the metadata of the target structured data from a specified location.

In a possible implementation, the second data mobility sensing apparatus subscribes to, from a global message bus, the data mobility information of the plurality of directories in the global file system, where the plurality of directories include the target directory. Further, optionally, the plurality of directories are directories respectively corresponding to the plurality of pieces of structured data.

Step S405: The first data mobility sensing apparatus deletes the metadata of the target structured data from the MetaStore on the first big data platform.

FIG. 5 is used as an example. The first data mobility sensing apparatus deletes metadata shown in the area 502 from the MetaStore.

Optionally, step S405 is performed after the data in the target directory is migrated out of the first storage cluster.

In some possible implementations, the MetaStore on the first big data platform from which the metadata of the target structured data is deleted is used for a service query for big data, and the service query does not relate to a query for the target structured data.

For example, the first big data platform queries data in the first data processing system based on the MetaStore on the first big data platform, to obtain a query result. Because the MetaStore on the first big data platform does not include the metadata of the target structured data, a query in the first data processing system does not relate to a query for the target structured data.

Optionally, the embodiment shown in FIG. 4 further includes step S406. "Optionally" herein may be understood as: The second data mobility sensing apparatus may perform step S406, or may not perform step S406. Step S406 is specifically as follows:
Step S406: The second data mobility sensing apparatus inserts the metadata of the target structured data into a MetaStore on the second big data platform.

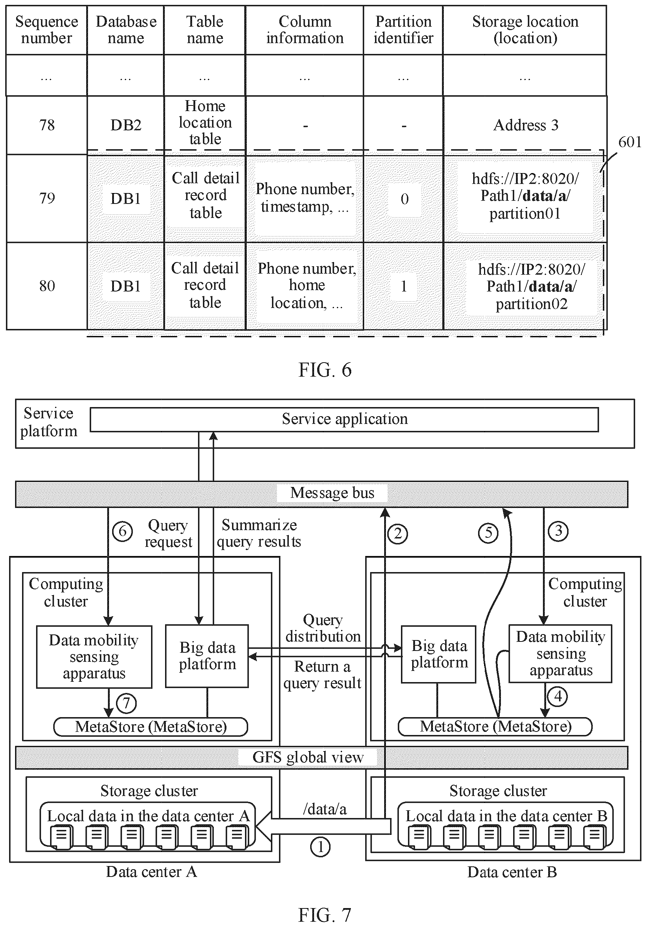

For example, FIG. 6 is a schematic diagram of another MetaStore according to an embodiment of this application. Data shown in the area 502 in FIG. 5 may be inserted into an area 601 that is in a metadata table and that is shown in FIG. 6.

In a possible design, after a target directory is migrated to a second storage cluster, a storage location of the target directory changes. When metadata of target structured data is inserted into a MetaStore on a second big data platform, the metadata of the target structured data needs to be changed, so that a storage location of the target structured data indicates a location of the target directory in the second storage cluster. For example, in the area 502 shown in FIG. 5, a storage location of the partition 0 of the call detail record table is "hdfs://IP1:8020/Path1/data/a/partition01". After the partition 0 of the call detail record table is migrated to the second storage cluster, the storage location of the partition 0 of the call detail record table is "hdfs://IP2:8020/Path1/data/a/partition01". In some scenarios, a relative location of the target directory remains unchanged. After migration, an absolute location of the target directory is changed to a location of a second storage device, to indicate a change of a storage location.

In a possible design, after determining that data in the target node is migrated to the second storage cluster, a second data mobility sensing apparatus inserts the metadata of the target structured data into the MetaStore on the second big data platform.

Optionally, the second big data platform provides a MetaStore service. The MetaStore service may be used to manage a MetaStore, and provide addition, deletion, a query, modification, or the like of the MetaStore. The second data mobility sensing apparatus may update a MetaStore on a first big data platform by using a MetaStore service on the first big data platform. For example, the second data mobility sensing apparatus may provide the MetaStore service with the metadata of the target structured data.

In a possible implementation, the second data mobility sensing apparatus may check a local attribute state of the target directory. When the local attribute state of the target directory indicates that the target directory is local, the second data mobility sensing apparatus inserts the metadata of the target structured data into the MetaStore on the second big data platform.

In a possible design, the second data mobility sensing apparatus may periodically or aperiodically check the local attribute state of the target directory. For example, the check is performed every 1s.

In some scenarios, metadata of a file in the target directory indicates a home device of the file in the target directory. The second data mobility sensing apparatus may obtain the metadata of the file in the target directory. When a home device of the file in the target node is the second storage cluster or a second data processing system, it indicates that data in the target directory is migrated to the second storage cluster or the second data processing system.

In some scenarios, the metadata of the file in the target directory indicates storage layout information of the file in the target directory. The second data mobility sensing apparatus may obtain the metadata of the file in the target directory. When storage layout information of the file in the target node includes indication information of the second storage cluster, it indicates that the data in the target directory is migrated to the second storage cluster.

Optionally, the MetaStore on the second big data platform is for implementing a data query for the second storage device. For example, the second big data platform queries data in the second data processing system based on the MetaStore on the second big data platform, to obtain a query result. Because the MetaStore on the second big data platform includes the metadata of the target structured data, the query for the second storage device may relate to a query for the target structured data.

In the embodiment shown in FIG. 4, when target structured data on the first big data platform is stored, a corresponding directory includes the target directory. Therefore, in this solution, the MetaStore on the first big data platform is updated based on data mobility of the target directory by sensing the data mobility of the target directory, so that a MetaStore on a big data platform includes metadata of local structured data (that is, a first storage cluster), but does not include metadata of structured data that has been migrated out of the first storage cluster. In this way, the big data platform can sense locality of the structured data, so that when executing a query, the big data platform may query local data. Data that has moved to another storage cluster is not accessed, thereby effectively improving correctness of a query result and stability of query efficiency.

The method embodiment shown in FIG. 4 includes numerous possible implementation solutions. The following describes some of the implementation solutions by using examples. It should be noted that for a related concept, an operation, or a logical relationship that is not explained in the following descriptions, refer to corresponding descriptions in the embodiment shown in FIG. 4.

FIG. 7 is a schematic diagram of running of a service system according to an embodiment of this application. Data of the service system is stored in a data center A and a data center B. The data center A and the data center B access a GFS. The data of the service system moves between a plurality of data centers. Data in a directory data/a is used as an example. The following steps are included.

Step ①: The GFS initiates mobility of /data/a from the data center B to the data center A.

Optionally, specifically, the mobility may be initiated by a data scheduling engine in the GFS, a first storage cluster, or a second storage cluster.

Step ②: The GFS pushes, to a global message bus, a message indicating that /data/a starts to migrate.

Step ③: A first data mobility sensing apparatus of the data center B monitors the message that is on a message bus and that indicates that /data/a starts to migrate. Further, the first data mobility sensing apparatus of the data center B starts to periodically poll a local attribute state of /data/a until all files in /data/a are converted into non-local files.

Step ④: The first data mobility sensing apparatus of the data center B scans metadata that is related to the directory /data/a and that is in a MetaStore.

Step ⑤: The first data mobility sensing apparatus of the data center B exports a scanning result in step ④ as data in a first format (for example, but not limited to formats such as json, yml, and xml), sends the data in the first format to the global message bus, and deletes corresponding information from a MetaStore of the data center B.

Further, after the data mobility sensing apparatus of the data center B pushes the data in the first format, a MetaStore update message for the data center A is generated on the global message bus.

Step ⑥: A second data mobility sensing apparatus of the data center A detects the MetaStore update message on the message bus through monitoring, and deserializes the data in the first format into table structure information that is applicable to the MetaStore.

Step ⑦: The second data mobility sensing apparatus of the data center A inserts table structure information related to /data/a into the MetaStore of the data center A.

So far, an association between the global file system and the MetaStore is complete. When a service application delivers a query request to the data center A, the data center A distributes the query request to the data center B, and a first big data platform and a second big data platform respectively complete a query for the data center B and a query for the data center A. In a process of executing a data query, the second big data platform identifies the data in /data/a based on an updated MetaStore. However, in a process in which the first big data platform executes a data query, because storage mapping information related to /data/a has been deleted from the MetaStore of the data center B, a data query for the data center B does not relate to access to the data in /data/a. In conclusion, according to embodiments of this application, in a cross-data center query process, each data center queries only local data in the query process, to ensure correctness of the query result and stability of the query performance.

The foregoing describes the method in embodiments of this application, and the following provides apparatuses in embodiments of this application.

It may be understood that to implement the functions in the foregoing method embodiments, a plurality of apparatuses provided in embodiments of this application, for example, the data mobility sensing apparatus, include corresponding hardware structures, software units, a combination of a hardware structure and a software structure, or the like for performing the functions. A person skilled in the art should be easily aware that in combination with a plurality of functions described in embodiments disclosed in this specification, the apparatus and the modules in the apparatus may be implemented by using hardware or a combination of hardware and computer software. Whether a function is performed by using the hardware or hardware driven by the computer software depends on particular applications and design constraints of the technical solutions. A person skilled in the art may implement the foregoing method embodiment by using different apparatus implementations in different usage scenarios. It should not be considered that different implementations of the apparatus go beyond the scope of embodiments of this application.

The following lists several possible apparatuses.

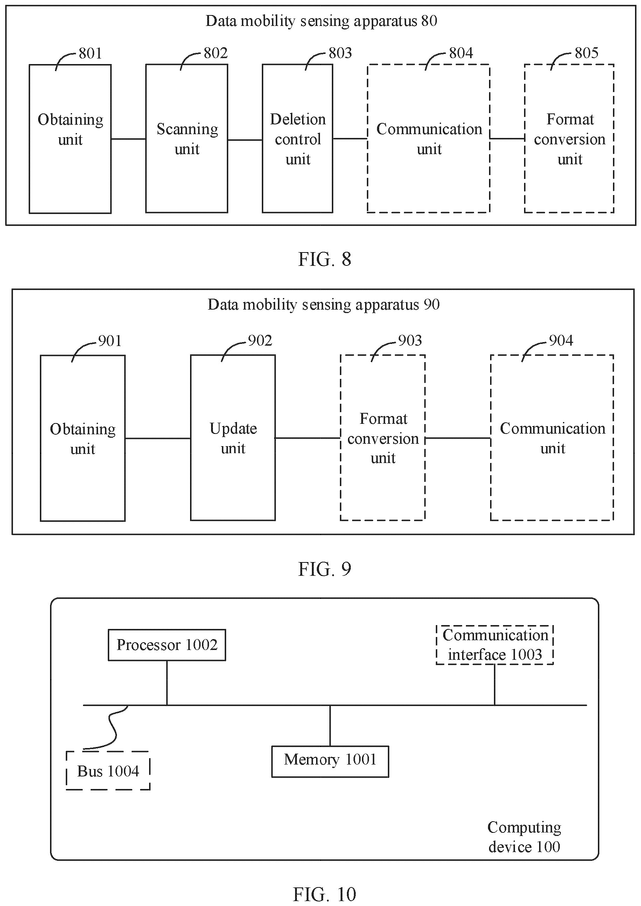

FIG. 8 is a schematic diagram of a structure of a data mobility sensing apparatus 80 according to an embodiment of this application. The data mobility sensing apparatus 80 may include an obtaining unit 801, a scanning unit 802, and a deletion control unit 803. The data mobility sensing apparatus 80 is configured to implement the foregoing data mobility sensing method, for example, the data mobility sensing method in the embodiment shown in FIG. 4 or FIG. 5.

The data mobility sensing apparatus 80 is configured to implement the method on the first data mobility sensing apparatus side in the embodiment shown in FIG. 4, or is configured to implement the method on the data center B side in the embodiment shown in FIG. 5.

In a possible implementation, the obtaining unit 801 is configured to obtain data mobility information that is of a target directory in a file system and that is in a first storage cluster, where the data mobility information indicates that data in the target directory is migrated from the first storage cluster to a second storage cluster. The target directory is a directory, in the file system, corresponding to target structured data on a first big data platform.

The scanning unit 802 is configured to scan a MetaStore on the first big data platform based on information about the target directory, to obtain metadata of the target structured data, where the metadata of the target structured data is used to describe an attribute of the target structured data. The MetaStore on the first big data platform includes respective metadata of a plurality of pieces of structured data on the first big data platform, and the plurality of pieces of structured data include the target structured metadata.

The deletion control unit 803 is configured to: after the data in the target directory is migrated out of the first storage cluster, delete the metadata of the target structured data from the MetaStore on the first big data platform.

**In** a possible implementation, the metadata of the target structured data includes a storage location of the target structured data in the first storage cluster.

**In** another possible implementation, the target structured data is a data table or a database on the first big data platform.

**In** a possible implementation, the metadata of the target structured data includes an identity of the target structured data.

**In** a possible implementation, the metadata of the target structured data further includes one or more of the following: a version of the target structured data, a type of the target structured data, a partition identifier of the target structured data, the version of the target structured data, or the like.

In another possible implementation, the scanning unit 802 is further configured to:
scan a storage location of each piece of structured data in the MetaStore on the first big data platform based on the information about the target directory, and use structured data whose storage location is target data as the target structured data.

In another possible implementation, the scanning unit 802 is further configured to:
scan the MetaStore based on the information about the target directory by using a MetaStore service on the first big data platform.

In another possible implementation, the second storage cluster belongs to a second data processing system, the second data processing system further includes a second computing cluster connected to the second storage cluster, and a second big data platform runs in the second computing cluster.

The data mobility sensing apparatus further includes a communication unit 804, where the communication unit is configured to provide the second computing cluster with the metadata of the target structured data. Correspondingly, the second computing cluster may insert the metadata of the target structured data into a MetaStore on the second big data platform.

In another possible implementation, the target structured metadata is used to construct the target structured data.

In another possible implementation, the data mobility sensing apparatus includes a format conversion unit 805, where the format conversion unit is configured to convert the metadata of the target structured data into data in a first format.

The communication unit is configured to provide the second computing cluster with the data in the first format.

In another possible implementation, the file system belongs to a global file system, and the first storage cluster and the second storage cluster each store a part of data of the global file system. The global file system provides a global message bus.

The communication unit 804 is further configured to send the metadata of the target structured data to the global message bus.

In another possible implementation, the file system belongs to a global file system, and the first storage cluster and the second storage cluster each store a part of data of the global file system. The global file system provides a global message bus.

The obtaining unit 801 is further configured to:
monitor the global message bus to obtain the data mobility information of the target directory.

In another possible implementation, the data mobility sensing apparatus further includes the communication unit 804. The communication unit 804 is configured to:
subscribe to data mobility information of a plurality of directories in the global file system from the global message bus, where the plurality of directories are directories respectively corresponding to the plurality of pieces of structured data in the global file system.

In another possible implementation, the MetaStore on the first big data platform from which the metadata of the target structured data is deleted is used for a service query for big data, and the service query does not relate to a query for the target structured data.

In another possible implementation, the obtaining unit 801 is further configured to:
obtain metadata of a file in the target directory, where the metadata of the file in the target directory indicates a home device of the file in the target directory; and
when the home device of the file in the target node is not the first storage cluster, migrate the data in the target directory out of the first storage cluster.

In another possible implementation of the third aspect, the obtaining unit 801 is further configured to:
obtain the metadata of the file in the target directory, where the metadata of the file in the target directory indicates storage layout information of the file in the target directory; and
when the storage layout information of the file in the target node does not include indication information of the first storage cluster, migrate the data in the target directory out of the first storage cluster.

FIG. 9 is a schematic diagram of a structure of a data mobility sensing apparatus 90 according to an embodiment of this application. The data mobility sensing apparatus 80 may include an obtaining unit 901 and an update unit 902. The data mobility sensing apparatus 90 is configured to implement the foregoing data mobility sensing method, for example, the data mobility sensing method in the embodiment shown in FIG. 4 or FIG. 5.

For example, the data mobility sensing apparatus 90 is configured to implement the method on the second data mobility sensing apparatus side in the embodiment shown in FIG. 4, or is configured to implement the method on the data center A side in the embodiment shown in FIG. 5.

In a possible implementation, the obtaining unit 901 is configured to obtain data mobility information of a target directory and/or metadata of target structured data.

In a possible implementation, the update unit 902 is configured to: after the obtaining unit 901 obtains the data mobility information of the target directory in a file system and obtains the metadata of the target structured data, insert the metadata of the target structured data into a MetaStore on a second big data platform. The data mobility information indicates that data in the target directory is migrated to a second storage cluster. The target directory is a storage directory corresponding to the target structured data in the second storage cluster. The metadata of the target structured data is used to describe an attribute of the target structured data.

In a possible implementation, the metadata of the target structured data includes a storage location of the target structured data in the second storage cluster.

In another possible implementation, the target structured data is a data table or a database on the second big data platform.

In another possible implementation, the metadata of the target structured data includes an identity of the target structured data.

In another possible implementation, the metadata of the target structured data further includes one or more of the following: a version of the target structured data, a type of the target structured data, a partition identifier of the target structured data, the version of the target structured data, or the like.

In another possible implementation, the MetaStore is read, written, and queried by using a MetaStore service.

In another possible implementation, the target structured data is the data table or the database on the second big data platform.

In another possible implementation, the data in the target directory is from a first storage cluster, the first storage cluster belongs to a first data processing system, the first data processing system further includes a first computing cluster connected to the first storage cluster, and a first big data platform runs in the first computing cluster.

The obtaining unit 901 is further configured to:
receive the metadata of the target structured data from the first computing cluster.

In another possible implementation, the metadata of the target structured data from the first computing cluster is in a first format. The data mobility sensing apparatus further includes a format conversion unit 903, where the format conversion unit 903 is configured to convert the metadata of the target structured data in the first format into a format that can be identified by using a metadata service on the second big data platform.

In another possible implementation, the file system belongs to a global file system, and the first storage cluster and the second storage cluster each store a part of data of the global file system. The global file system provides a global message bus. The obtaining unit 901 is further configured to:
receive the metadata of the target structured data from the first computing cluster through the global message bus.

In another possible implementation, the file system belongs to a global file system, and the first storage cluster and the second storage cluster each store a part of data of the global file system. The global file system provides a global message bus. The obtaining unit 901 is further configured to:
monitor a message of the global message bus to obtain the data mobility information of the target directory the file system.

In another possible implementation, the data mobility sensing apparatus further includes a communication unit 904. The communication unit 904 is configured to:
subscribe to data mobility information of a plurality of directories in the global file system from the global message bus, where the plurality of directories are directories respectively corresponding to a plurality of pieces of structured data.

In another possible implementation, the MetaStore into which the metadata of the target structured data is inserted is for a service query for big data.

Optionally, the service query relates to a query for the target structured data.

Optionally, the second big data platform executes the service query for the big data.

FIG. 10 is a schematic diagram of a structure of a computing device 100 according to an embodiment of this application. The computing device 100 may be a physical device, for example, a disk-controller integrated storage device, a server (for example, a rack server), or a host, or may be a virtual device, for example, a virtual machine or a container.

As shown in FIG. 10, the computing device 100 includes a processor 1002, a memory 1001, and a bus 1004, and optionally includes a communication interface 1003. The processor 1002 communicates with the memory 1001 and the like through the bus 1004. It should be understood that in the computing device 100, a quantity of processors and a quantity of memories are not limited in this application.

The memory 1001 is configured to provide storage space. The storage space may optionally store application data, user data, an operating system, a computer program, and the like. The memory 1001 may include a volatile memory (volatile memory), for example, a random access memory (random access memory, RAM). The memory 1001 may further include a non-volatile memory (non-volatile memory), for example, a read-only memory (read-only memory, ROM), a flash memory, a hard disk drive (hard disk drive, HDD), or a solid-state drive (solid state drive, SSD).

The processor 1002 is a module for performing an operation, and may include any one or more of processors such as a central processing unit (central processing unit, CPU), a graphics processing unit (graphics processing unit, GPU), a microprocessor (microprocessor, MP), a digital signal processor (digital signal processor, DSP), a data processing unit (data processing unit, DPU), a coprocessor (assisting the central processing unit in completing corresponding processing and application), an application-specific integrated circuit (Application-Specific Integrated Circuit, ASIC), a microcontroller unit (Microcontroller Unit, MCU), and a programmable logic gate array (field programmable gate array, FPGA).

The communication interface 1003 is configured to provide information input or output for at least one processor, and/or the communication interface 1003 may be configured to receive data sent from the outside and/or send data to the outside. The communication interface 1003 may be a wired link interface including, for example, an Ethernet cable, or may be a wireless link (Wi-Fi, Bluetooth, universal wireless transmission, another wireless communication technology, and the like) interface. Optionally, the communication interface 1003 may further include a transmitter (for example, a radio frequency transmitter, an antenna, and the like), a receiver, or the like that is coupled to the interface.

The bus 1004 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used in FIG. 7 for representation, but it does not represent that there is only one bus or one type of bus. The bus 1004 may include a path for information transmission between components (for example, the memory 1001, the processor 1002, and the communication interface 1003) of the computing device 100.

In this embodiment of this application, the memory 1001 stores executable instructions, and the processor 1002 executes the executable instructions to implement the foregoing data mobility sensing method, for example, the data mobility sensing method in the embodiment such as FIG. 4 or FIG. 5. In other words, the memory 1001 stores instructions used to perform a data mobility sensing method.

An embodiment of this application further provides a computing device cluster. The computing device cluster includes at least one computing device 100. The computing device 100 may be a server, for example, a central server, an edge server, or a local server in a local data center. In some embodiments, the computing device may alternatively be a terminal device, for example, a desktop computer, a notebook computer, or a smartphone.

For example, the computing device cluster includes the at least one computing device 100. A memory 1001 in one or more computing devices 100 in the computing device cluster may store same instructions for performing a data mobility sensing method.

In some possible implementations, the memory 1001 in the one or more computing devices 100 in the computing device cluster may alternatively separately store a part of instructions for performing the data mobility sensing method. In other words, a combination of the one or more computing devices 100 may jointly execute instructions for performing the data mobility sensing method.

In some possible implementations, the one or more computing devices in the computing device cluster may be connected via a network. The network may be a wide area network, a local area network, or the like.

An embodiment of this application further provides a computer program product including instructions. The computer program product may be a software or program product that includes instructions and that can run on a computing device or be stored in any usable medium. The instructions are used to implement the foregoing data mobility sensing method, for example, the data mobility sensing method in the embodiment such as FIG. 4 or FIG. 5.

An embodiment of this application further provides a computer-readable storage medium. The computer-readable storage medium includes instructions. The instructions are used to implement the foregoing data mobility sensing method, for example, the data mobility sensing method in the embodiment such as FIG. 4 or FIG. 5.

The computer-readable storage medium may be any usable medium that can be stored by a computing device, or a data storage device such as a data center including one or more usable media. The usable medium may be a magnetic medium (for example, a floppy disk, a hard disk, or a magnetic tape), an optical medium (for example, a DVD), a semiconductor medium (for example, a solid-state drive), or the like.

In embodiments of this application, the word such as "example" or "for example" is used to represent giving an example, an illustration, or a description. Any embodiment or design scheme described as the "example" or "for example" in this application should not be explained as being more preferred or having more advantages than another embodiment or design scheme. Exactly, use of the word such as the "example" or "for example" is intended to present a related concept in a specific manner.

In embodiments of this application, "at least one" means one or more, and "a plurality of" means two or more than two. "At least one of the following items (pieces)" or a similar expression thereof refers to any combination of these items, including any combination of singular items (pieces) or plural items (pieces). For example, at least one of a, b, or c may represent: a, b, c, (a and b), (a and c), (b and c), or (a, b, and c), where a, b, and c may be singular or plural. "And/or" describes an association relationship between associated objects, and represents that three relationships may exist. For example, A and/or B may represent the following three cases: Only A exists, both A and B exist, and only B exists, where A and B may be singular or plural. The character "/" usually represents an "or" relationship between the associated objects.

In addition, unless otherwise stated, ordinal numbers such as "first" and "second" in embodiments of this application are for differentiation between a plurality of objects, but are not for limiting a sequence, a time sequence, priorities, or importance degrees of the plurality of objects. For example, a first container storage management apparatus and a second container storage management apparatus are merely for ease of description, but do not represent that the first container storage management apparatus and the first container storage management apparatus are different in apparatus structures, deployment sequences, importance degrees, and the like.

A person of ordinary skill in the art may understand that all or some of the steps of the foregoing embodiments may be implemented by using hardware or a program instructing related hardware. The program may be stored in a computer-readable storage medium. The storage medium may be a read-only memory, a magnetic disk, an optical disc, or the like.

Finally, it should be noted that the foregoing embodiments are merely for describing the technical solutions of the present invention, but are not for limiting the present invention. Although the present invention is described in detail with reference to the foregoing embodiments, the person of ordinary skill in the art should understand that the person may still make modifications to the technical solutions recorded in the foregoing embodiments or make equivalent replacements to some technical features thereof. However, these modifications or replacements do not make essence of a corresponding technical solution depart from the scope of the technical solutions of embodiments of the present invention.

## Claims

1. A data mobility sensing method, applied to a data mobility sensing apparatus in a first data processing system, wherein the first data processing system comprises a first computing cluster and a first storage cluster, the first computing cluster is connected to the first storage cluster, and a first big data platform runs in the first computing cluster, wherein the method comprises:
obtaining data mobility information that is of a target directory in a file system and that is in the first storage cluster, wherein the data mobility information indicates that data in the target directory is migrated from the first storage cluster to a second storage cluster, and the target directory is a directory, in the file system, corresponding to target structured data on the first big data platform;
scanning a MetaStore on the first big data platform based on information about the target directory, to obtain metadata of the target structured data, wherein the metadata of the target structured data is used to describe an attribute of the target structured data, the MetaStore on the first big data platform comprises respective metadata of a plurality of pieces of structured data on the first big data platform, and the plurality of pieces of structured data comprise the target structured metadata; and
after the data in the target directory is migrated out of the first storage cluster, deleting the metadata of the target structured data from the MetaStore on the first big data platform.

2. The method according to claim 1, wherein the metadata of the target structured data comprises one or more of the following: a name of the target structured data, a storage location of the target structured data in the first storage cluster, a version of the target structured data, a type of the target structured data, and a partition identifier of the target structured data.

3. The method according to claim 2, wherein the storage location of the target structured data in the first storage cluster is a storage location corresponding to the target directory.

4. The method according to any one of claims 1 to 3, wherein the second storage cluster belongs to a second data processing system, the second data processing system further comprises a second computing cluster connected to the second storage cluster, and a second big data platform runs in the second computing cluster; and
the method further comprises:
providing the second computing cluster with the metadata of the target structured data, to enable the second computing cluster to insert the metadata of the target structured data into a MetaStore on the second big data platform.

5. The method according to claim 4, wherein the providing the second computing cluster with the metadata of the target structured data comprises:
converting the metadata of the target structured data into data in a first format; and
providing the second computing cluster with the data in the first format.

6. The method according to claim 4 or 5, wherein the file system belongs to a global file system, the first storage cluster and the second storage cluster each store a part of data of the global file system, and the global file system provides a global message bus; and
the providing the second computing cluster with the metadata of the target structured data comprises:
sending the metadata of the target structured data to the global message bus.

7. The method according to any one of claims 1 to 5, wherein the file system belongs to a global file system, the first storage cluster and the second storage cluster each store a part of data of the global file system, and the global file system provides a global message bus; and
the obtaining data mobility information that is of a target directory in a file system and that is in the first storage cluster comprises:
monitoring the global message bus to obtain the data mobility information of the target directory.

8. The method according to claim 7, wherein the method further comprises:
subscribing to data mobility information of a plurality of directories in the global file system from the global message bus, wherein the plurality of directories are directories respectively corresponding to the plurality of pieces of structured data in the global file system.

9. The method according to any one of claims 1 to 8, wherein the MetaStore on the first big data platform from which the metadata of the target structured data is deleted is used for a service query for big data, and the service query does not relate to a query for the target structured data.

10. A data mobility sensing method, applied to a data mobility sensing apparatus in a second data processing system, wherein the second data processing system comprises a second computing cluster and a second storage cluster, the second computing cluster is connected to the second storage cluster, and a second big data platform runs in the second computing cluster, wherein the method comprises:
after obtaining data mobility information of a target directory in a file system and obtaining metadata of target structured data, inserting the metadata of the target structured data into a MetaStore on the second big data platform, wherein
the data mobility information indicates that data in the target directory is migrated to the second storage cluster, and the target directory is a storage directory corresponding to the target structured data in the second storage cluster; and
the metadata of the target structured data is used to describe an attribute of the target structured data.

11. The method according to claim 10, wherein the metadata of the target structured data comprises one or more of the following: a name of the target structured data, a storage location of the target structured data in the second storage cluster, a version of the target structured data, a type of the target structured data, and a partition identifier of the target structured data.

12. The method according to claim 10 or 11, wherein the data in the target directory is from a first storage cluster, the first storage cluster belongs to a first data processing system, the first data processing system further comprises a first computing cluster connected to the first storage cluster, and a first big data platform runs in the first computing cluster; and
the method further comprises:
receiving the metadata of the target structured data from the first computing cluster.

13. The method according to claim 12, wherein the metadata of the target structured data from the first computing cluster is in a first format, and the method further comprises:
converting the metadata of the target structured data in the first format into a format that can be identified by using a metadata service on the second big data platform.

14. The method according to claim 12 or 13, wherein the file system belongs to a global file system, the first storage cluster and the second storage cluster each store a part of data of the global file system, and the global file system provides a global message bus; and the receiving the metadata of the target structured data from the first computing cluster comprises:
receiving the metadata of the target structured data from the first computing cluster through the global message bus.

15. The method according to any one of claims 10 to 13, wherein the file system belongs to a global file system, the first storage cluster and the second storage cluster each store a part of data of the global file system, and the global file system provides a global message bus; and the obtaining data mobility information of a target directory in a file system comprises:
monitoring a message of the global message bus to obtain the data mobility information of the target directory in the file system.

16. The method according to claim 15, wherein the method further comprises:
subscribing to data mobility information of a plurality of directories in the global file system from the global message bus, wherein the plurality of directories are directories respectively corresponding to the plurality of pieces of structured data.

17. The method according to any one of claims 10 to 16, wherein the MetaStore into which the metadata of the target structured data is inserted is used for a service query for big data, and the service query relates to a query for the target structured data.

18. A data mobility sensing apparatus, comprising an obtaining unit, a scanning unit, and a deletion control unit, wherein the data mobility sensing apparatus is configured to implement the method according to any one of claims 1 to 9.

19. A data mobility sensing apparatus, comprising an obtaining unit and an update unit, wherein the data mobility sensing apparatus is configured to implement the method according to any one of claims 10 to 17.

20. A data storage system, wherein the data storage system comprises a first data processing system, the first data processing system comprises a first computing cluster and a first storage cluster, the first computing cluster is connected to the first storage cluster, and a first big data platform runs in the first computing cluster; and
the first data processing system comprises the data mobility sensing apparatus according to claim 18.

21. The data storage system according to claim 20, wherein the data storage system further comprises a second data processing system, the second data processing system comprises a second computing cluster and a second storage cluster, the second computing cluster is connected to the second storage cluster, and a second big data platform runs in the second computing cluster; and
the second data processing system comprises the data mobility sensing apparatus according to claim 19.

22. A computing device, wherein the computing device comprises a processor and a memory; and
when the processor invokes a computer program or instructions in the memory, the method according to any one of claims 1 to 9 is performed.

23. A computing device, wherein the computing device comprises a processor and a memory; and
when the processor invokes a computer program or instructions in the memory, the method according to any one of claims 10 to 17 is performed.

24. A computer-readable storage medium, wherein the computer-readable storage medium is configured to store instructions or a computer program; and
when the instructions or the computer program is executed, the method according to any one of claims 1 to 9 or the method according to any one of claims 10 to 17 is implemented.

25. A computer program product, comprising instructions or a computer program, wherein
when the instructions or the computer program is executed, the method according to any one of claims 1 to 9 or the method according to any one of claims 10 to 17 is implemented.
